# EUROPÄISCHE PATENTANMELDUNG

(11) **EP 1 577 187 A1**
(43) Veröffentlichungstag der Anmeldung: **21.09.2005**
(21) Anmeldenummer: 05004770.3
(22) Anmeldetag: 04.03.2005
(51) Int. Cl.: B61D 27/00, B60H 1/00, F16B 5/00, E05C 9/02

(54) **Befestigungsvorrichtung, insbesondere für ein autarkes Klimaanlage-Modul**

(30) Priorität: 17.03.2004 DE 102004012917
(71) Anmelder: Konvekta AG, 34613 Schwalmstadt (DE)
(72) Erfinder: Lomp, Dirk, 34630 Gilserberg-Moischeid (DE)
(74) Vertreter: Zinsinger, Norbert

(57) **Zusammenfassung**

Es wird eine Befestigungsvorrichtung (18) zur einfachen und zeitsparenden loslösbaren Befestigung einer insbesondere von einem autarken Modul gebildeten Klimaanlage (10) auf dem Dach eines Fahrzeuges, insbesondere eines schienengebundenen Fahrzeugs, beschrieben, wobei von gegenüberliegenden Seitenflächen (12) des Klimaanlage-Moduls (10) erste Befestigungszapfen (14) wegstehen, und auf dem Fahrzeugdach Positionierschienenelemente (20) zueinander parallel befestigt sind, die voneinander einen Abstand aufweisen, der an den Abstand zwischen den Seitenflächen (12) des Klimaanlage-Moduls (10) angepasst ist. Die Positionierschienenelemente (20) weisen nach oben offene erste Ausnehmungen (24) auf. Von den Positionierschienenelementen (20) stehen außenseitig seitlich neben den ersten Ausnehmungen (24) zweite Befestigungszapfen (26) weg. An den Positionierschienenelementen (20) sind Verriegelungsschienenelemente (22) vorgesehen, die den zweiten Befestigungszapfen (26) zugeordnete Langlöcher (40) und den ersten Ausnehmungen (24) zugeordnete, nach oben offene, spazierstockförmig verlaufende zweite Ausnehmungen (42) aufweisen.

## Beschreibung

Die Erfindung betrifft eine Befestigungsvorrichtung zur loslösbaren Befestigung einer insbesondere von einem autarken Modul gebildeten Klimaanlage auf dem Dach eines Fahrzeugs, insbesondere auf dem Dach eines schienengebundenen Fahrzeugs.

Eine Klimaanlage insbesondere zur abnehmbaren Anordnung über dem Sonnen- oder Schiebedach eines Kraftfahrzeuges, die einen Verdampfer, einen Kondensator, einen Kompressor und eine Antriebseinrichtung für den Kompressor aufweist, die in einem gemeinsamen Gehäuse angeordnet sind, ist aus der DE 35 31 045 A1 bekannt. Das Gehäuse dieser bekannten Klimaanlage ist mittels einfach lösbarer Befestigungselemente am Dach des Kraftfahrzeuges befestigbar. Bei diesen Befestigungselementen handelt es sich um Befestigungselemente, wie sie beispielsweise von Dachgepäckträgern, von Trägern für Surfbretter, von Dachträgern für Fahrräder, von Skiträgern oder dergleichen bekannt sind.

Aus der DE 199 12 267 C2 ist eine Rastvorrichtung zur Verbindung von zwei Bauteilen eines Kraftfahrzeuges an langgestreckten Anlageflächen, insbesondere zur Verbindung eines Stoßfängers mit einem Kotflügel, bekannt, wobei am ersten Bauteil wenigstens zwei, vorzugsweise mehrere voneinander beabstandete Rastbolzen und am zweiten Bauteil eine Rastleiste mit den Rastbolzen zugeordneten Rastöffnungen für eine gegenseitige Rastverbindung angebracht sind. Die Rastbolzen weisen einen Bolzenkopf mit einer daran anschließbaren Bolzen-Rastausnehmung auf. Das zweite Bauteil enthält den Rastbolzen zugeordnete Bauteil-Durchstecköffnungen. Die Rastleiste ist als Verschiebeleiste ausgebildet, die an der Rückseite des zweiten Bauteils wenigstens mittelbar in Richtung der Bauteil-Durchstecköffnungen längsverschiebbar gehalten ist. Die Verschiebeleiste weist den Rastbolzen zugeordnete, in Leistenlängsrichtung ausgerichtete Schlüssellochöffnungen auf, dergestalt, dass in einer Offenstellung der Verschiebeleiste die Bauteil-Durchstecköffnungen jeweils mit dem weiteren Öffnungsbereich einer Schlüssellochöffnung zum Durchstecken des zugeordneten Bolzenkopfes fluchten und in einer verschobenen Raststellung der Verschiebeleiste diese jeweils mit dem gegenüber dem Bolzenkopf engeren Langlochbereich einer Schlüssellochöffnung hinter dem bis zur Bolzen-Rastausnehmung durchgesteckten Bolzenkopf in die zugeordnete Bolzen-Rastausnehmung eingreift, um die Rastverbindung herzustellen.

Die DE 198 06 690 A1 beschreibt eine Befestigung eines Bauteiles an einem Tragteil, das wenigstens eine längliche Durchlassöffnung aufweist, die an einem Ende einen Bereich mit größerer Öffnungsweite und am anderen Ende einen Bereich mit einer kleineren Öffnungsweite aufweist, wobei das Bauteil wenigstens ein Halteteil besitzt, das aus einem senkrecht vom Bauteil wegstehenden Schaft und aus einem diesen quer überragenden Kopf gebildet ist. Diese bekannte Befestigung soll eine einfache und rasche Montage und Demontage ermöglichen und auch nach mehreren Montagevorgängen eine Sicherung der Befestigung gewährleisten. Das wird bei dieser bekannten Befestigung dadurch erreicht, dass das Bauteil wenigstens ein Rastelement aufweist, das aus einem sich quer zum Schaft erstreckenden, in dessen Längsrichtung federnd nachgiebigen Bügel und aus einer am freien Ende des Bügels angeordneten, in derselben Richtung wie das Halteelement vom Bauteil wegstehenden Rastnase gebildet ist, wobei die Rastnase in eine im Tragteil von den Durchlassöffnungen beabstandet angeordnete Aussparung einrastet, wenn sich die Schäfte der Halteelemente in den Bereichen mit den kleineren Öffnungsweiten der Durchlassöffnungen befinden.

Eine Befestigungsvorrichtung zur Aufdachmontage für Fahrzeug-Klimaanlagen, welche wenigstens eine Gebläseeinheit, die über eine Dachöffnung mit einem Luftschacht des Kraftfahrzeuges in Verbindung steht, und einen dem Dach zugewandten Boden besitzen, wobei zwischen dem Boden der Klimaanlage und der die Dachöffnung umgebenden Dachhaut ein die Dachöffnung umgebendes, unmittelbar die Verbindung zwischen der Klimaanlage und dem Luftschacht bildendes flexibles, bei der Montage zusammendrückbares Dichtungselement angeordnet ist, ist aus der DE 38 18 224 C2 bekannt. Dort sind zwischen dem Boden der Klimaanlage und der Dachhaut zusätzlich mehrere als Abstandshalter dienende Gummielemente und Schraubbolzen angeordnet. Die Gummielemente und die Schraubbolzen können zu Gummilagern zusammengefasst sein.

Die US 6 339 934 B1 offenbart ein Gerät zur Montage einer Klimaanlage auf einem Fahrzeugdach. Das Dach ist mit einer Dachöffnung ausgebildet, in der ein Rahmen enthalten ist. Die Klimaanlage ist auf dem Rahmen angebracht. Eine einteilige Bodenplatte ist im Rahmen vorgesehen, auf der eine einstellbare Trennwand angeordnet ist, die das Innere des Rahmens in zwei voneinander getrennte Abteile unterteilt.

Die DE 101 61 254 A1 offenbart eine Klimaanlage, die als autarkes flaches Modul ausgebildet ist, das nur einen Energieanschluss einer einzigen Energieform aufweist. Bei dem Energieanschluss handelt es sich vorzugsweise um einen elektrischen Energieanschluss; der Energieanschluss kann beispielsweise jedoch auch ein hydraulischer oder pneumatischer Energieanschluss sein.

Insbesondere bei schienengebundenen Fahrzeugen wie Eisenbahnen ergibt sich das Problem, dass es zur Reparatur bzw. zum Austausch einer auf einem Dach eines Eisenbahnwaggons montierten Klimaanlage erforderlich ist, den Waggon in eine Eisenbahn-Reparaturwerkstatt zu verbringen, um dort die entsprechende Reparatur durchzuführen. Das bedingt einen erheblichen logistischen Aufwand.

Der Erfindung liegt die Aufgabe zugrunde, eine Befestigungsvorrichtung der eingangs genannten Art zu schaffen, die ein unkompliziertes zeitsparendes Auswechseln einer insbesondere von einem autarken Modul gebildeten Klimaanlage auf dem Dach eines schienengebundenen Fahrzeuges ermöglicht, wobei der Austausch direkt vor Ort, d.h. am Gleis erfolgen kann.

Diese Aufgabe wird bei einer Befestigungsvorrichtung der eingangs genannten Art erfindungsgemäß dadurch gelöst, dass von gegenüberliegenden Seiten des Klimaanlage-Moduls erste Befestigungszapfen wegstehen, dass auf dem Fahrzeugdach Positionierschienenelemente zueinander parallel befestigt sind, die voneinander einen Abstand aufweisen, der an den Abstand zwischen den beiden Seitenflächen des Klimaanlage-Moduls angepasst ist, wobei die Positionierschienenelemente nach oben offene erste Ausnehmungen aufweisen und von den Positionierschienenelementen außenseitig neben den ersten Ausnehmungen zweite Befestigungszapfen wegstehen, und dass an den Positionierschienenelementen Verriegelungsschienenelemente vorgesehen sind, die den zweiten Befestigungszapfen zugeordnete Langlöcher und den ersten Ausnehmungen zugeordnete, nach oben offene, spazierstockförmig verlaufende zweite Ausnehmungen aufweisen, wobei zum loslösbaren Festlegen der ersten Befestigungszapfen des Klimaanlage-Moduls in den ersten Ausnehmungen der Positionierschienenelemente und in den zweiten Ausnehmungen der Verriegelungsschienenelemente die Verriegelungsschienenelemente an den Positionierschienenelementen mittels Befestigungseinrichtungen festlegbar sind.

Um eine zuverlässige Festlegung des Klimaanlage-Moduls auf dem Dach des schienengebundenen Fahrzeugs zu gewährleisten, ist es zweckmäßig, wenn von den gegenüberliegenden Seiten des Klimaanlage-Moduls jeweils mindestens zwei ersten Befestigungszapfen wegstehen. Bei einer bevorzugten Ausbildung stehen von den gegenüberliegenden Seiten des Klimaanlage-Moduls jeweils drei erste Befestigungszapfen weg.

Die Positionierschienenelemente sind vorzugsweise in Dachlängsrichtung orientiert und weisen vorzugsweise eine Länge auf, die an die Länge der gegenüberliegenden Seiten des Klimaanlage-Moduls angepasst ist.

Das autarke Klimaanlage-Modul weist vorzugsweise einen einzigen Energieanschluss, d.h. einen Energieanschluss einer einzigen Energieform auf. Bei dem besagten Energieanschluss handelt es sich vorzugsweise um einen elektrischen Energieanschluss. Das Klimaanlage-Modul wird zweckmäßigerweise aus dem elektrischen Bahnnetz mit Energie versorgt, die Heizung erfolgt zweckmäßigerweise mit Hilfe von im Klimaanlage-Modul vorgesehenen elektrischen Heizstäben.

Bei der erfindungsgemäßen Befestigungseinrichtung weist das jeweilige Positionierschienenelement vorzugsweise mindestens zwei nach oben offene erste Ausnehmungen auf. Bei einer bevorzugten Ausbildung weist das jeweilige Positionierschienenelemente - entsprechend den drei ersten Befestigungszapfen an den gegenüberliegenden Seiten des Klimaanlage-Moduls - drei nach oben offene Ausnehmungen auf.

Seitlich neben der jeweiligen ersten Ausnehmung ist mindestens ein zweiter Befestigungszapfen vorgesehen. Als zweckmäßig hat es sich erwiesen, wenn die jeweilige erste Ausnehmung zwischen zwei zugehörigen zweiten Befestigungszapfen vorgesehen ist.

Entsprechend der Anzahl erster Befestigungszapfen an der jeweiligen Seite des Klimaanlage-Moduls und der dieser Anzahl entsprechenden Anzahl von nach oben offenen ersten Ausnehmungen des jeweiligen Positionierschienenelementes weist das jeweilige Verriegelungsschienenelement mindestens zwei - vorzugsweise drei - nach oben offene, spazierstockförmig verlaufende zweite Ausnehmungen auf. Diese zweiten Ausnehmungen sind am jeweiligen Verriegelungsschienenelement gleich orientiert.

Seitlich neben der jeweiligen zweiten Ausnehmung ist mindestens ein Langloch vorgesehen. Bevorzugt ist es jedoch, wenn die jeweilige zweite Ausnehmung zwischen zwei Langlöchern vorgesehen ist.

Die ersten und die zweiten Befestigungszapfen sind an ihrem distalen Ende vorzugsweise jeweils mit einem vergrößerten Kopfteil ausgebildet und die Langlöcher sind zweckmäßigerweise mit einer Schlüssellochrandkontur mit einem an das jeweilige Kopfteil angepassten vergrößerten Endabschnitt ausgebildet.

Das jeweilige Positionierschienenelement kann an einem Ende einen Querflansch aufweisen, durch den sich eine Schraube in Schienenlängsrichtung erstreckt, und am entsprechenden Ende des zugehörigen Verriegelungsschienenelementes kann eine Schraubmutter für die zugehörige Schraube fixiert sein, wobei die jeweilige Schraube und die zugehörige Schraubmutter die Befestigungseinrichtung bilden, mittels welcher das jeweilige Verriegelungsschienenelement am zugehörigen Positionierschienenelement und somit das autarke Klimaanlage-Modul auf dem Dach eines schienengebundenen Fahrzeuges einfach und zeitsparend befestigbar und im Bedarfsfall ebenso einfach und zeitsparend vom Dach des schienengebundenen Fahrzeugs, vor Ort, d.h. auf der Schiene, entfernt werden kann.

Zweckmäßigerweise sind auf dem Dach eines schienengebundenen Fahrzeuges eine Anzahl autarke Klimaanlage-Module mit Hilfe erfindungsgemäßer Befestigungsvorrichtungen angeordnet, so dass bei einem Ausfall eines Klimaanlage-Moduls die restlichen auf dem Dach des schienengebundenen Fahrzeuges befestigten Klimaanlage-Module weiterarbeiten können. Eine Reparatur eines Klimaanlage-Moduls muss nicht in einer Werkstatt erfolgen, sondern ein reparaturbedürftiges Klimaanlage-Modul kann einfach und zeitsparend vom Dach des schienengebundenen Fahrzeuges entfernt werden, d.h. das Auswechseln eines Klimaanlage-Moduls ist einfach und zeitsparend innerhalb einer Zeitspanne von weniger als einer Stunde möglich, wobei dieses Auswechseln am Gleis erfolgen kann.

Das jeweilige Klimaanlage-Modul wird beispielsweise mit R 134a als Kältemittel betrieben. Als Kühlmedium kann jedoch auch CO₂ zur Anwendung gelangen. In diesem Zusammenhang wird beispielsweise auf die eingangs genannte DE 101 61 254 A1 hingewiesen.

Die Klimaanlage-Module werden vorzugsweise zur Fahrgastraumklimatisierung bei schienengebundenen Fahrzeugen eingesetzt.

Weitere Einzelheiten, Merkmale und Vorteile ergeben sich aus der nachfolgenden Beschreibung eines in der Zeichnung abschnittweise dargestellten Ausführungsbeispieles der erfindungsgemäßen Befestigungsvorrichtung für ein ebenfalls nur abschnittsweise gezeichnetes Klimaanlage-Modul.

Es zeigen.
- Figur 1: abschnittweise in einer räumlichen Explosionsdarstellung eine Ausbildung der Befestigungsvorrichtung sowie eines autarken Klimaanlage-Moduls,
- Figur 2: eine der Figur 1 ähnlichen Darstellung, wobei die Verriegelungsschiene an der zugehörigen Positionierschiene positioniert ist,
- Figur 3: das Detail A gemäß Figur 2 in einem größeren Maßstab,
- Figur 4: eine der Figur 2 ähnlichen Darstellung, wobei die Verriegelungsschiene an der zugehörigen Positionierschiene derartig in Längsrichtung verschoben und positioniert ist, dass die ersten und zweiten Ausnehmungen für die ersten Befestigungszapfen der Klimaanlage-Moduls miteinander deckungsgleich angeordnet sind,
- Figur 5: das Detail B gemäß Figur 4 in einem größeren Maßstab,
- Figur 6: eine den Figuren 2 und 4 ähnliche Darstellung, wobei das Klimaanlage-Modul zwischen den beiden Positionierschienen angeordnet ist, wobei die Verriegelungsschienen an den Positionierschienen die in den Figuren 4 und 5 gezeichnete Position einnehmen,
- Figur 7: das Detail C gemäß Figur 6 in einem größeren Maßstab,
- Figur 8: eine der Figur 6 ähnliche Darstellung, wobei die Verriegelungsschiene an der zugehörigen Positionierschiene die Verriegelungsposition einnimmt, um das Klimaanlage-Modul am Dach eines (nicht dargestellten) schienengebundenen Fahrzeuges loslösbar zu fixieren, und
- Figur 9: das Detail D gemäß Figur 8 in einem größeren Maßstab.

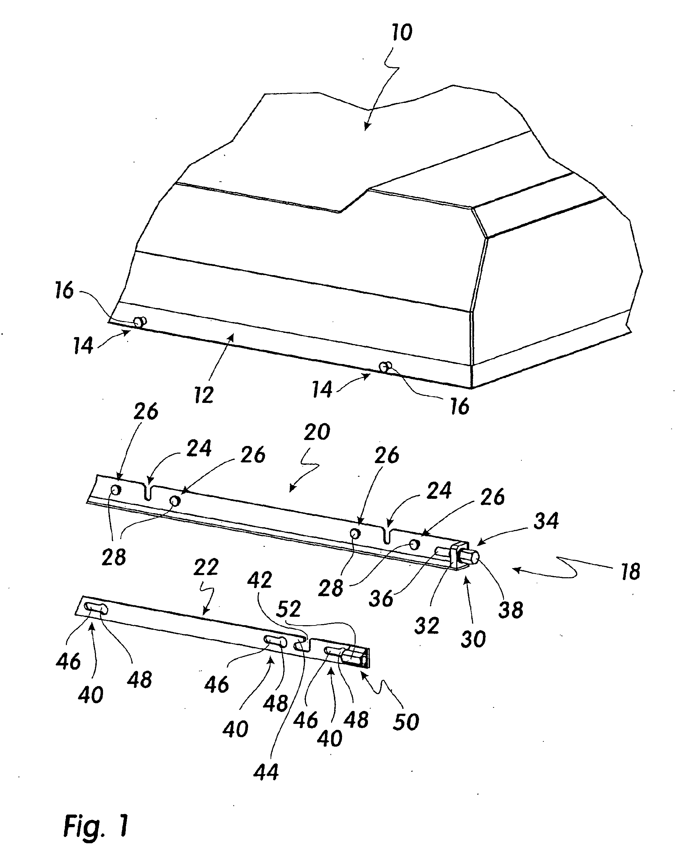

Figur 1 zeigt abschnittweise ein autarkes Klimaanlage-Modul 10 mit zwei sich gegenüberliegenden Seitenflächen 12, von welchen nur eine Seitenfläche 12 sichtbar ist. Von der jeweiligen, in Fahrzeuglängsrichtung orientierten Seitenfläche 12 stehen erste Befestigungszapfen 14 weg. Jeder Befestigungszapfen 14 ist an seinem von der Seitenfläche 12 entfernten distalen Ende mit einem vergrößerten Kopfteil 16 ausgebildet.

Zur einfachen und zeitsparenden loslösbaren Befestigung des autarken Klimaanlage-Moduls 10 auf dem Dach insbesondere eines schienengebundenen Fahrzeuges dienen Befestigungsvorrichtungen 18. Die jeweilige Befestigungsvorrichtung 18 weist ein Positionierschienenelement 20 und ein Verriegelungsschienenelement 22 auf. Das Positionierschienenelement 20 ist abgewinkelt profiliert und am Dach des schienengebundenen Fahrzeuges fixiert. In Figur 1 ist nur eines der Positionierschienenelemente 20 mit dem zugehörigen Verriegelungsschienenelement 22 abschnittweise verdeutlicht. Auf dem Dach des schienengebundenen Fahrzeuges sind zwei Positionierschienenelemente 20 zueinander parallel befestigt. Die beiden Positionierschienenelemente 20 weisen voneinander einen Abstand auf, der an den Abstand zwischen den beiden Seitenflächen 20 des autarken Klimaanlage-Moduls 10 angepasst ist.

Das jeweilige Positionierschienenelement 20 weist nach oben offene erste Ausnehmungen 24 auf. Der Abstand zwischen den ersten Ausnehmungen 24 entspricht dem Abstand zwischen den ersten Befestigungszapfen 14. Die lichte Weite der ersten Ausnehmungen 24 ist an die Querschnittsabmessungen der ersten Befestigungszapfen 14 angepasst.

Seitlich neben der jeweiligen ersten Ausnehmung 24 stehen vom jeweiligen Positionierschienenelement 20 zwei zweite Befestigungszapfen 26 weg. Der jeweilige zweite Befestigungszapfen 26 ist an seinem distalen Ende mit einem vergrößerten Kopfteil 28 ausgebildet.

Das jeweilige Positionierschienenelement 20 weist an einem Ende 30 einen Querflansch 32 auf, durch den sich unverlierbar eine Schraube 34 erstreckt. Die Schraube 34 weist einen Gewindeabschnitt 36 und einen Schraubkopf 38 auf.

Das zum jeweiligen Positionierschienenelement 20 zugehörige Verriegelungsschienenelement 22 weist den zweiten Befestigungszapfen 26 zugeordnete Langlöcher 40 und den ersten Ausnehmungen 24 zugeordnete zweite Ausnehmungen 42 auf. Die zweiten Ausnehmungen 42, von welchen in Figur 1 nur eine dargestellt ist, sind - wie die ersten Ausnehmungen 24 des jeweiligen Positionierschienenelementes 20 - nach oben offen und spazierstockförmig gestaltet, so dass sich an der jeweiligen zweiten Ausnehmung 42 eine Verriegelungsnase 44 ergibt. Die Langlöcher 40 im jeweiligen Verriegelungsschienenelement 22 sind mit einer Schlüssellochrandkontur 46 ausgebildet. Das jeweilige Langloch 40 weist einen an das jeweilige Kopfteil 28 des entsprechenden, vom Positionierschienenelement 20 wegstehenden zweiten Befestigungszapfens 26 angepassten vergrößerten Endabschnitt 48 auf. Am einen Ende 50 des jeweiligen Verriegelungsschienenelementes 22 ist eine Schraubmutter 52 fixiert, in die der Gewindeabschnitt 36 der am Positionierschienenelement 20 unverlierbar vorgesehenen Schraube 34 einschraubbar ist.

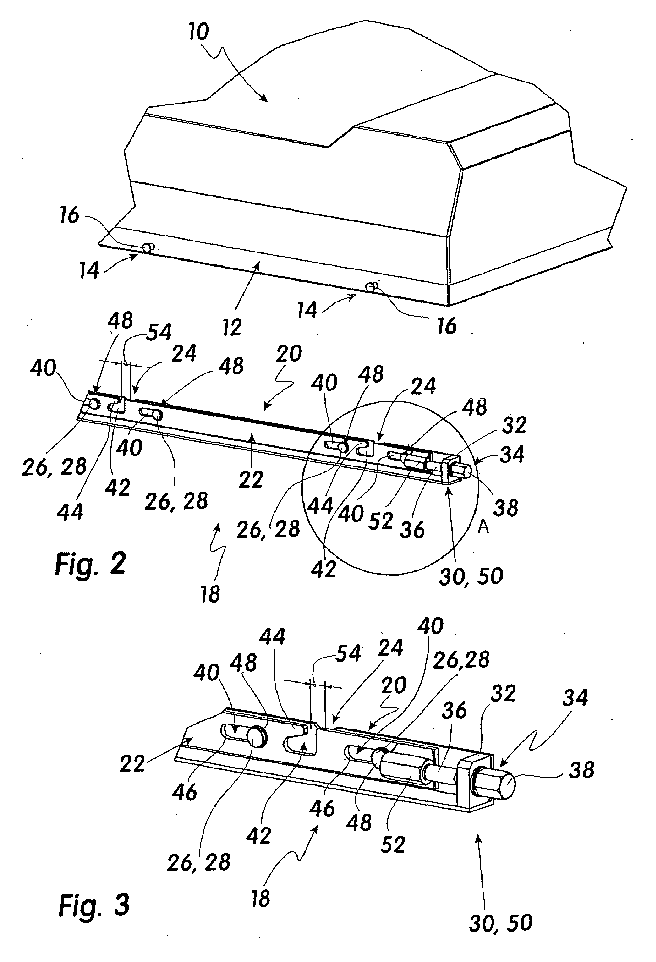

In Figur 1 sind das autarke Klimaanlage-Modul 10, das Positionierschienenelement 20 und das Verriegelungsschienenelement 22 voneinander getrennt dargestellt. Demgegenüber verdeutlicht die Figur 2 einen Zustand der Befestigungsvorrichtung 18 - von dem autarken Klimaanlage-Modul 10 beabstandet -, wobei das Verriegelungsschienenelement 22 am zugehörigen Positionierschienenelement 20 angeordnet ist. Dabei erstrecken sich die zweiten Befestigungszapfen 26 mit ihren vergrößerten Kopfteilen 28 durch die vergrößerten Endabschnitte 48 der im jeweiligen Verriegelungsschienenelement 22 ausgebildeten Langlöcher 40. Die nach oben offenen spazierstockförmig verlaufenden zweiten Ausnehmungen 42 sind in dieser Zwischenstellung der Befestigungsvorrichtung 18 gegen die ebenfalls nach oben offenen ersten Ausnehmungen 24 die zugehörigen Positionierschienenelementes 20 versetzt. Dieser Versatz ist in Figur 2 mit der Bezugsziffer 54 verdeutlicht.

In dieser Zwischenstellung ist der Gewindeabschnitt 36 der Schraube 34 in die Schraubmutter 52 einschraubbar, wie auch aus Figur 3 deutlich ersichtlich ist, in der gleiche Einzelheiten mit denselben Bezugsziffern bezeichnet sind, wie in Figur 2 sowie in Figur 1.

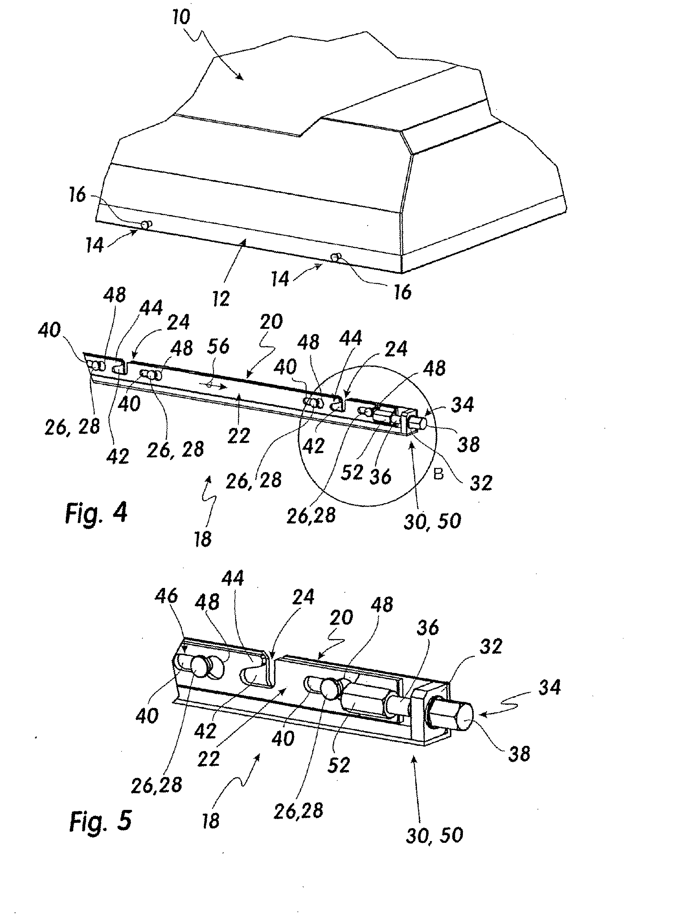

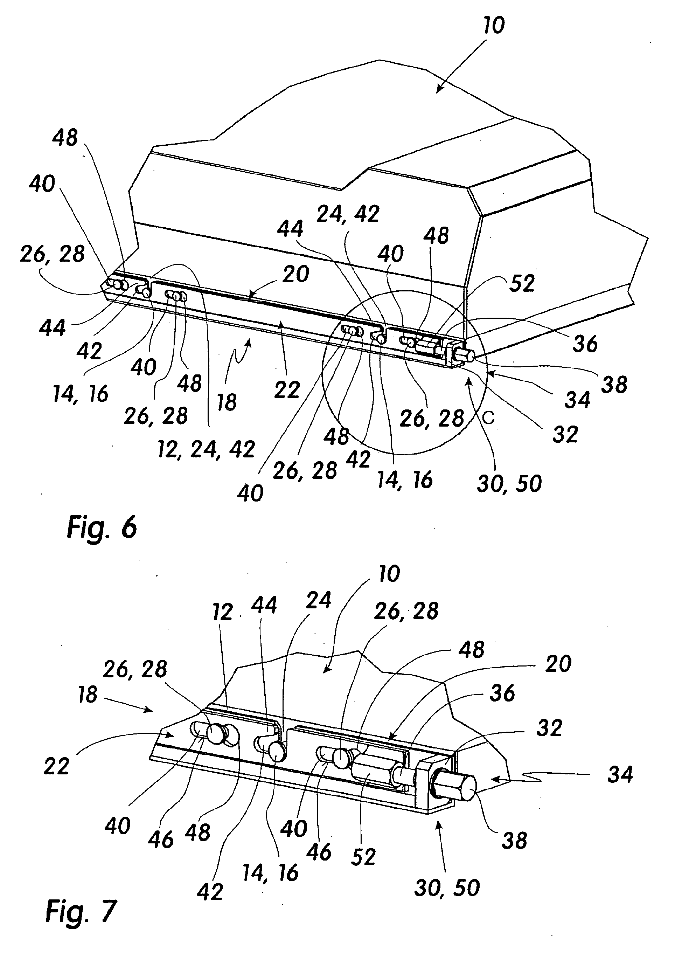

Die Figuren 4 und 5 verdeutlichen eine Zwischenstellung der Befestigungsvorrichtung 18 für das autarke Klimaanlage-Modul 10, wobei das jeweilige Verriegelungsschienenelement 22 in Bezug auf das zugehörige Positionierschienenelement 20 mit Hilfe der in die Schraubmutter 52 definiert eingeschraubten Schraube 34 in Richtung des Pfeiles 56 derartig verstellt wird, dass der Versatz 54 (siehe die Figuren 2 und 3) zwischen der jeweiligen ersten Ausnehmung 24 und der zugehörigen zweiten Ausnehmung 42 des entsprechenden Positionierschienenelementes 20 und des zugehörigen Verriegelungsschienenelements 22 eliminiert ist, so dass die nach oben offenen ersten Ausnehmungen 24 des jeweiligen Positionierschienenelementes 20 und die nach oben offenen spazierstockförmig gestalteten zweiten Ausnehmungen 42 des zugehörigen Verriegelungsschienenelementes 22 deckungsgleich angeordnet sind, so dass das autarke Klimaanlage-Modul 10 auf dem Dach des Schienenfahrzeuges angeordnet werden kann, wobei die von den Seitenflächen 12 des Klimaanlage-Moduls 10 wegstehenden ersten Befestigungszapfen 14 in den deckungsgleich angeordneten ersten und zweiten Ausnehmungen 24 und 42 zu liegen kommen, wie aus Figur 6 und insbesondere auch aus Figur 7 deutlich ersichtlich ist. In dieser Zwischenstellung befinden sich die vom jeweiligen Positionierschienenelement 20 nach außen wegstehenden zweiten Befestigungszapfen 26 bereits in einem mittleren Abschnitt der Langlöcher 40, so dass das jeweiligen Verriegelungsschienenelement 22 auch hierdurch am zugehörigen Positionierschienenelement 20 in Richtung des Pfeiles 56 beweglich festgelegt ist.

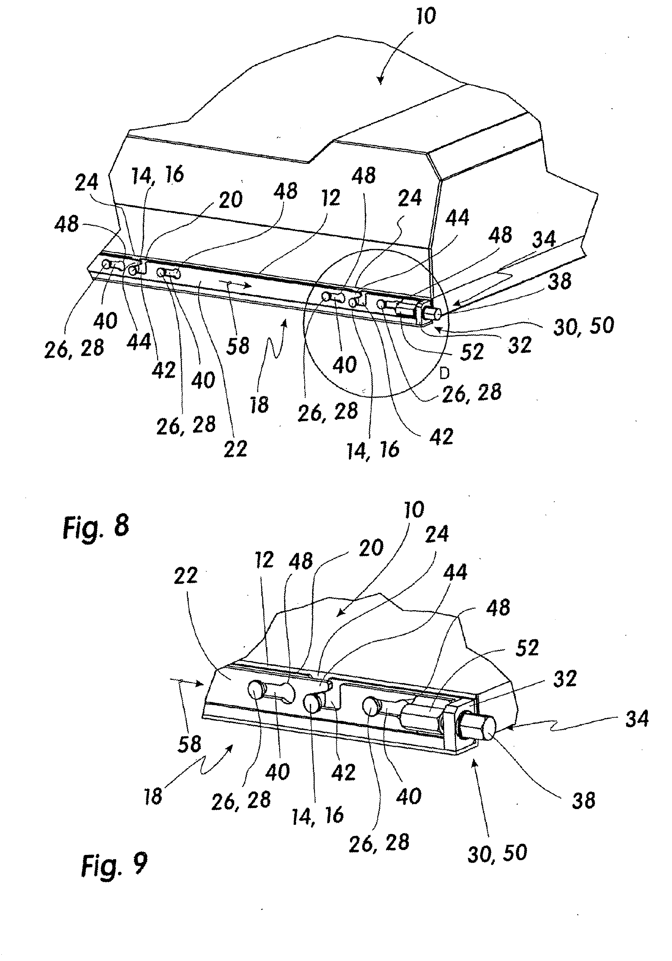

Wird anschließend der Gewindeabschnitt 36 der Schraube 34 weiter in die Schraubmutter 52 eingeschraubt, so bewegt sich das entsprechende Verriegelungsschienenelement 22 in Richtung des Pfeiles 58 (siehe die Figuren 8 und 9) weiter, bis die jeweilige Verriegelungsnase 44 den zugehörigen ersten Befestigungszapfen 14 in der entsprechenden ersten und zweiten Ausnehmung 24 und 42 des Positionierschienenelementes 20 und des Verriegelungsschienenelements 22 fixiert.

Gleiche Einzelheiten sind in den Figuren 1 bis 9 jeweils mit denselben Bezugsziffern bezeichnet, so dass es sich erübrigt, in Verbindung mit allen Figuren alle Einzelheiten jeweils detailliert zu beschreiben.

Die Entfernung eines autarken Klimaanlage-Moduls 10 vom Dach eines schienengebundenen Fahrzeuges ist in der zu den Figuren 2 bis 9 umgekehrten Reihenfolge genauso einfach und zeitsparend möglich wie die Befestigung eines autarken Klimaanlage-Moduls 10 auf dem Dach eines schienengebundenen Fahrzeugs.

Das Klimaanlage-Modul weist unterseitig nicht dargestellte Frischluft-, Umluft- und Ausblasöffnungen auf, die mit Dachkanälen des schienengebundenen Fahrzeugs strömungstechnisch verbindbar sind.

## Patentansprüche

1. Befestigungsvorrichtung zur loslösbaren Befestigung einer insbesondere von einem autarken Modul gebildeten Klimaanlage auf dem Dach eines Fahrzeuges, insbesondere auf dem Dach eines schienengebundenen Fahrzeugs,
**dadurch gekennzeichnet,**
**dass** von gegenüberliegenden Seitenflächen (12) des Klimaanlage-Moduls (10) erste Befestigungszapfen (14) wegstehen,
**dass** auf dem Fahrzeugdach Positionierschienenelemente (20) zueinander parallel befestigt sind, die voneinander einen Abstand aufweisen, der an den Abstand zwischen den Seitenflächen (12) des Klimaanlage-Moduls (10) angepasst ist, wobei die Positionierschienenelemente (20) nach oben offene erste Ausnehmungen (24) aufweisen und von den Positionierschienenelementen (20) außenseitig seitlich neben den ersten Ausnehmungen (24) zweite Befestigungszapfen (26) wegstehen, und
**dass** an den Positionierschienenelementen (20) Verriegelungsschienenelemente (22) vorgesehen sind, die den zweiten Befestigungszapfen (26) zugeordnete Langlöcher (40) und den ersten Ausnehmungen (24) zugeordnete, nach oben offene, spazierstockförmig verlaufende zweite Ausnehmungen (42) aufweisen,
wobei zum loslösbaren Festlegen der ersten Befestigungszapfen (14) des Klimaanlage-Moduls (10) in den ersten Ausnehmungen (24) der Positionierschienenelemente (20) und in den zweiten Ausnehmungen (42) der Verriegelungsschienenelemente (22) an den Positionier- und Verriegelungsschienenelemente (20 und 22) Befestigungseinrichtungen (34, 52) vorgesehen sind.

2. Befestigungsvorrichtung nach Anspruch 1,
**dadurch gekennzeichnet,**
**dass** von den gegenüberliegenden Seitenflächen (12) des Klimaanlage-Moduls (10) jeweils mindestens zwei erste Befestigungszapfen (14) wegstehen.

3. Befestigungsvorrichtung nach Anspruch 1,
**dadurch gekennzeichnet,**
**dass** die Positionierschienenelemente (20) in Dachlängsrichtung orientiert sind und eine Länge aufweisen, die an die Länge der Seitenflächen (12) des Klimaanlage-Moduls (10) angepasst sind.

4. Befestigungsvorrichtung nach Anspruch 3,
**dadurch gekennzeichnet,**
**dass** das jeweilige Positionierschienenelement (20) mindestens zwei nach oben offene erste Ausnehmungen (24) aufweist.

5. Befestigungsvorrichtung nach einem der Ansprüche 1 bis 4,
**dadurch gekennzeichnet,**
**dass** seitlich neben der jeweiligen ersten Ausnehmung (24) mindestens ein zweiter Befestigungszapfen (26) vorgesehen ist.

6. Befestigungsvorrichtung nach einem der Ansprüche 1 bis 5,
**dadurch gekennzeichnet,**
**dass** die jeweilige erste Ausnehmung (24) zwischen zwei zugehörigen zweiten Befestigungszapfen (26) vorgesehen ist.

7. Befestigungsvorrichtung nach einem der Ansprüche 1 bis 6,
**dadurch gekennzeichnet,**
**dass** das jeweilige Verriegelungsschienenelement (22) mindestens zwei nach oben offene, spazierstockförmig verlaufende zweite Ausnehmungen (42) aufweist.

8. Befestigungsvorrichtung nach einem der Ansprüche 1 bis 7,
**dadurch gekennzeichnet,**
**dass** seitlich neben der jeweiligen zweiten Ausnehmung (42) mindestens ein Langloch (40) vorgesehen ist.

9. Befestigungsvorrichtung nach einem der Ansprüche 1 bis 8,
**dadurch gekennzeichnet,**
**dass** die jeweilige zweite Ausnehmung (42) zwischen zwei Langlöchern (40) vorgesehen ist.

10. Befestigungsvorrichtung nach einem der Ansprüche 1 bis 9,
**dadurch gekennzeichnet,**
**dass** die ersten und zweiten Befestigungszapfen (14 und 26) an ihrem distalen Ende jeweils mit einem vergrößerten Kopfteil (16; 28) ausgebildet sind, und dass die Langlöcher (40) mit einer Schlüssellochrandkontur (46) mit einem an das jeweilige Kopfteil des ersten Befestigungszapfens (14) angepassten vergrößerten Endabschnitt (48) ausgebildet sind.

11. Befestigungsvorrichtung nach einem der Ansprüche 1 bis 10,
**dadurch gekennzeichnet,**
**dass** das jeweilige Positionierschienenelement (20) an einem Ende (30) einen Querflansch (32) aufweist, durch den sich eine Schraube (34) in Schienenlängsrichtung erstreckt, und dass am entsprechenden Ende (50) des zugehörigen Verriegelungsschienenelementes (22) eine Schraubmutter (52) für die Schraube (34) fixiert ist, wobei die jeweilige Schraube (34) und die zugehörige Schraubmutter (52) die entsprechende Befestigungseinrichtung bilden.
